(19) Europäisches Patentamt

European Patent Office

Office européen des brevets

(11) **EP 4 290 075 A1**

(12) **EUROPEAN PATENT APPLICATION**

(43) Date of publication:
**13.12.2023 Bulletin 2023/50**

(21) Application number: **22178323.6**

(22) Date of filing: **10.06.2022**

(51) International Patent Classification (IPC):
***F03G 7/08*** *(2006.01)*

(52) Cooperative Patent Classification (CPC):
**F03G 7/081**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Kinergizer IP BV
2629 JD Delft (NL)**

(72) Inventor: **van de Wetering, Erik
2629 JD Delft (NL)**

(74) Representative: **De Vries & Metman
Overschiestraat 180
1062 XK Amsterdam (NL)**

(54) **RAILWAY ENERGY HARVESTER**

(57) A method is disclosed for fabricating an on-board railway energy harvester for a railway vehicle. The energy harvester is configured to convert mechanical vibrations into electrical power. The method comprises determining, based on a diameter of a wheel of the railway vehicle and on an expected speed of the railway vehicle, a power versus frequency response of the energy harvester. The power versus frequency response defines, for each of a plurality of frequencies of mechanical vibrations provided to the energy harvester, a power as output by the energy harvester. The method also comprises fabricating the energy harvester such that it has the determined power versus frequency response.

**Fig. 1**

EP 4 290 075 A1

## Description

## FIELD OF THE INVENTION

This disclosure relates to an on-board railway energy harvester, a method for fabricating such on-board railway energy harvester, in particular to such an energy harvester and such method wherein the power versus frequency response of energy harvester is determined based on a diameter of a wheel and on an expected speed. This disclosure furthermore relates to a computer-implemented method, data processing system, computer program and storage medium for performing one or more steps of the fabrication method.

## BACKGROUND

As for example described in {Qi et al; A review of vibration energy harvesting in rail transportation field; iScience volume 25, issue 3, 103849, MARCH 18, 2022} ambient energy harvesting in the railway environment is a very promising technology to achieve the self-powering of monitoring systems. Energy harvesters may be used for example to power on-board sensors, such as temperature sensors, stress sensors, et cetera.

Typically, an energy harvester comprises a movable mass that can oscillate in response to ambient mechanical vibrations. On-board railway energy harvesters, for example, may be placed at a position on and/or in a railway vehicle. Then, vibrations of the railway vehicle at that position typically induce the oscillations of the movable mass of the energy harvester. The energy harvester is then configured to transduce the kinetic energy of the moving mass into electrical power, e.g. by means of appropriately positioned coils and magnets. It is known that an oscillation of a mass will have the highest amplitudes if it is driven at its resonance frequency. Hence, for an energy harvester it is very important that the (movable mass of the) energy harvester has a resonance frequency that, for most of the time, is close to the frequency of the ambient vibrations. Then, for most of the time, that movable mass of the energy harvester will oscillate with relatively high amplitudes, leading to relatively high power output.

In any case, there is a continuous striving in the art to improve railway energy harvesters, in particular to increase the power that is output by on-board railway energy harvesters.

## SUMMARY

To that end, a method is disclosed for fabricating an on-board railway energy harvester for a railway vehicle. The energy harvester is configured to convert mechanical vibrations into electrical power. The method comprises determining, based on a diameter of a wheel of the railway vehicle and on an expected speed of the railway vehicle, a power versus frequency response of the energy harvester. The power versus frequency response defines, for each of a plurality of frequencies of mechanical vibrations provided to the energy harvester, a power as output by the energy harvester. The method also comprises fabricating the energy harvester such that it has the determined power versus frequency response.

The inventors have realized that it is advantageous to consider the wheel diameter of the railway vehicle onto and/or into which the energy harvester will be positioned together with the expected speed of the railway vehicle. These parameters namely indicate a number of revolutions of the wheel per unit of time, or rotational frequency of the wheel. The rotational frequency is for example given by An irregularity on the wheel, in particular on a contact surface of the wheel, will be in contact with the rail at the rotation frequency. Further, every time the irregularity contacts the rail or passes by the rail, it will shock or bump the railway vehicle. Thus, the irregularity will shock or bump the railway vehicle at the rotational frequency of the wheel, which in turn depends on the diameter of the wheel and the speed of the railway vehicle. As such, the irregularity causes a vibration of the railway vehicle at the rotation frequency of the wheel. Of course, an energy harvester that is positioned on and/or in the railway vehicle, preferably one that is relatively close to the wheel in question, will be designed such that it outputs relatively high electrical power when it is driven at the rotational frequency, for example by designing is such that it has a resonance frequency at, or at least relatively close to, the rotational frequency.

In an embodiment, the wheel is a metal wheel and the rails supporting the railway vehicle will also be made out of metal. Such metal-metal contact indeed causes the above described effect of vibrations in the railway vehicle of a frequency dependent on wheel diameter and speed.

Thus, knowledge of the expected rotational frequency of the wheel can be very well used for fabricating an efficient energy harvester for a railway vehicle that is expected to travel at a certain speed for most of the time. The disclosed method is particularly advantageous in that it enables to fabricate an efficient energy harvester without having to perform in-situ tests, such as in-situ vibration measurements on the railway vehicle.

An irregularity of a wheel may be understood as anything that causes the round shape of the wheel to be distorted, such as an indent or recess in the wheel and/or a protrusion on the wheel. As referred to herein, the contact surface of the wheel may be understood to be formed by the parts of the wheel that contact the rail at some point in time during a revolution of the wheel.

The expected speed may be a speed at which the railway vehicle is expected to travel most of the time. Additionally or alternatively, the expected speed may be a cruising speed of the railway vehicle. Additionally or alternatively, the expected speed may be an expected average speed of the railway vehicle. If the railway vehicle for which the energy harvester is fabricated is already in operation, then the expected speed referred to above can be determined based on historical speed data of the railway vehicle.

Fabricating the energy harvester such that it has some specific power versus frequency response may be performed using methods known in the art. Typically, a power versus frequency response is shaped as a peak having a center frequency at which the output power is maximum and having a certain width, e.g. as indicated by the full width at half maximum (FWHM) parameter. It is well known that the natural frequency of an oscillating body, above referred to as "mass", is given by

$$\frac{1}{2\pi}\sqrt{k/m}$$

, k and m being the stiffness and moving mass of the oscillating body. In the context of energy harvesters, the natural frequency of the oscillating body within the energy harvester, defines the center frequency of the energy harvester. Thus, the center frequency can be tuned by changing the stiffness and/or the mass of the oscillating body of the energy harvester. In particular, increasing the stiffness and lowering the mass will increase the center frequency of the peak, and vice-versa.

The width of the peak can be tuned with electrical damping, for example. By increasing the damping, for example, the bandwidth increases yet the output power decreases. The opposite is also true, when the damping is decreased, the output power increases, at the cost of bandwidth. It should be appreciated that any nonlinearity in the system, e.g. nonlinear stiffness or nonlinear damping, could also potentially increase the bandwidth.

As referred to herein, an on-board energy harvester should be understood as an energy harvester that is configured to be positioned on and/or in a railway vehicle. It should not be construed as indicating that the energy harvester is indeed positioned on and/or in a railway vehicle.

Typically all the wheels of the railway vehicle have substantially the same diameter. Preferably, the wheel the diameter of which is taken into account for determining a power versus frequency response of an energy harvester, is the wheel closest to the intended position, of the energy harvester in question, on and/or in the railway vehicle.

In an embodiment, the method comprises determining, based on the diameter of the wheel of the railway vehicle and on the expected speed of the railway vehicle, a fundamental frequency. Such embodiment may further comprise determining, based on the determined fundamental frequency, the power versus frequency response such that it has a peak having a full width at half maximum, FWHM , that is equal to or larger than twice the fundamental frequency, preferably equal to or larger than three times the fundamental frequency.

This embodiment is advantageous in that it allows the energy harvester to capture strong harmonic components in the ambient vibrations as well, not merely the vibrations at the rotational frequency referred to above.

In an embodiment, the peak has an FWHM equal to or smaller than six times the fundamental frequency, preferably equal to or smaller than five times the fundamental frequency.

Preferably, the FWHM is larger than twice the fundamental frequency and smaller than three times the fundamental frequency, e.g. the FWHM may be equal to 2.5 times the fundamental frequency.

As referred to herein, a full width at half maximum (FWHM) of a peak may be understood as the difference between two frequency values, wherein each of the two frequency values is associated with a power output value equal to half the maximum power output value of the peak.

In an embodiment, the fundamental frequency is determined based on a ratio between the expected speed of the railway vehicle and the diameter of the wheel of the railway vehicle.

In an embodiment, the fundamental frequency is determined in accordance with $f_0 = v_{train} / (\pi^* D_{wheel})$, wherein $f_0$ indicates the fundamental frequency, $v_{train}$ indicates the expected speed of the railway vehicle and $D_{wheel}$ indicates the diameter of the wheel.

This embodiment provides a convenient manner for determining the fundamental frequency.

In an embodiment, the method comprises measuring, for a plurality of speeds of the railway vehicle, vibrational accelerations at a position on and/or in the railway vehicle at which the to be fabricated energy harvester is intended. In such embodiment, a centre frequency for the power versus frequency response may be determined, based on the measured vibrational accelerations. The centre frequency is the frequency at which a peak, optionally the peak referred to in claim 2, of the power versus frequency response has its maximum value.

This embodiment is advantageous in that it can be ensured that the power versus frequency response has an appropriate centre frequency.

In an embodiment, the method comprises determining, for each speed of the plurality of speeds at which vibrational accelerations were measured, a Fourier transform of the measured accelerations. Each Fourier transform indicates for a plurality of frequencies respective magnitudes of acceleration. Such embodiment may also comprise determining a range of frequencies where the Fourier transforms exhibit relatively large magnitudes of acceleration, relative to other one or more frequency ranges, and determining a frequency in said range of frequencies to be the centre frequency of the power versus frequency response of the energy harvester.

This embodiment provides a convenient manner for determining an appropriate centre frequency for the power versus frequency response.

The Fourier transforms determined for the respective speeds may be combined to determine a compound signal, the compound signal indicating for a plurality of frequencies respective magnitudes of acceleration. Combining the Fourier transforms F1(f), F2(f), ..., Fn(f) may be performed by adding the Fourier transforms together: F1(f) + F2(f) + ...+ Fn(f) and/or by determining, for each frequency f_x, an average value of the Fourier transforms: ( F1(f_x) + F2(f_x) + ...+ Fn(f_x) ) / n.

In an embodiment, the method comprises determining, based on the determined power versus frequency response of the energy harvester, a minimum electric damping ratio for the energy harvester. In such embodiment, the step of fabricating the energy harvester comprises fabricating the energy harvester such that it has the determined minimum electric damping ratio.

In an embodiment, the minimum electric damping ratio is determined in accordance with $\zeta_e$=FWHM/(2*$f_{centre}$)- $\zeta_m$ wherein $\zeta_e$ indicates the minimum electric damping ratio, $\zeta_m$ indicates a mechanical damping ratio, FWHM indicates the FWHM of the peak of the power versus frequency response, $f_{centre}$ indicates the determined centre frequency.

A damping coefficient is typically expressed in units of [Ns/m].

For an electromagnetic energy harvester, while keeping the mass and stiffness constant, the damping ratio can be tuned by changing the rate of magnetic flux passing through a volume of a coil. Changing the coil volume influences the damping level, as well as changing the strength of the magnetic field passing through it. Once those parameters are fixed, the electromagnetic damping of the system can still be tuned by changing the effective load resistance of the circuit. A low resistance results in a large damping while a large resistance limits the current flowing through the coil, lowering the damping.

In an embodiment, the power versus frequency response of the energy harvester. is determined based on a distance between tie tracks of the rails that are to support the railway vehicle and on the expected speed of the railway vehicle.

One aspect of this disclosure relates to a method for fabricating an on-board railway energy harvester for a railway vehicle, wherein the energy harvester is configured to convert mechanical vibrations into electrical power. In this aspect the method comprises based a distance between tie tracks of the rails that are to support the railway vehicle and on an expected speed of the railway vehicle ,determining a power versus frequency response of the energy harvester, the power versus frequency response defining, for each of a plurality of frequencies of mechanical vibrations provided to the energy harvester, a power as output by the energy harvester, and fabricating the energy harvester such that it has the determined power versus frequency response. Thus, in this aspect, the diameter of the wheel is not necessarily considered when determining the power versus frequency response.

The inventors have found that the frequency with which a train travelling at a certain speed, encounters a tie track also causes vibrations at that frequency. The inventors found that the rails may deflect at positions not supported by tie tracks, as a result of which the wheel receives an impulse when encountering a tie track. Hence, it may be beneficial to determine the power versus frequency response such that also at this frequency, the energy harvester outputs significant power.

One aspect of this disclosure relates to a railway energy harvester obtainable by performing any of the methods described herein for fabricating an energy harvester.

One aspect of this disclosure relates to a railway energy harvester that is configured to convert mechanical vibrations into electrical power. The energy harvester exhibits a power versus frequency response. The power versus frequency response defines, for each of a plurality of frequencies of mechanical vibrations provided to the energy harvester, a respective power as output by the energy harvester. The power versus frequency response has a peak. Further, the peak has a full width at half maximum, FWHM, that is equal to or larger than twice a fundamental frequency. Herein, the fundamental frequency is given by $f_0$= $v_{train}$ /($\pi$*$D_{wheel}$), wherein $f_0$ indicates the fundamental frequency, $v_{train}$ indicates the expected speed of the railway vehicle and $D_{wheel}$ indicates the diameter of the wheel. Additionally or alternatively, the peak has its maximum value at a centre frequency, the centre frequency being a frequency in a range of frequencies in which a plurality of Fourier transforms, each Fourier transform indicating for a plurality of frequencies respective magnitudes of acceleration, exhibit relatively large magnitudes of acceleration, relative to other one or more frequency ranges, wherein the Fourier transforms are obtainable by

- measuring, for a plurality of speeds of the railway vehicle, vibrational accelerations at a position on and/or in the railway vehicle at which the to be fabricated energy harvester is intended, and
- for each speed of the plurality of speeds at which vibrational accelerations were measured, determining a Fourier transform of the measured accelerations.

One aspect of this disclosure relates to a railway vehicle, such as a train, having installed thereon, preferably on an axle of the wheel and/or on a hub of the wheel, any of the railway energy harvesters described herein.

One aspect of this disclosure relates to a computer-implemented method for determining a power versus frequency response for a railway energy harvester that is configured to convert mechanical vibrations into electrical power. The computer-implemented method comprises determining, based on a diameter of a wheel of a railway vehicle and on an expected speed of the railway vehicle, a power versus frequency response of the energy harvester, wherein the power versus frequency response defines, for each of a plurality of frequencies of mechanical vibrations provided to the energy harvester, a respective power as output by the energy harvester.

In this computer-implemented method the step of determining the power versus frequency response may be performed as described herein.

One aspect of this disclosure relates to a data processing system comprising a processor that is configured to perform any of the methods described herein.

One aspect of this disclosure relates to a computer program comprising instructions, which, when executed by a data processing system, cause the data processing system to perform any of the methods described herein.

One aspect of this disclosure relates to a non-transitory computer-readable storage medium having stored thereon any of the computer programs described herein.

One aspect of this disclosure relates to a computer comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided. A computer program may, for example, be downloaded (updated) to the existing systems or be stored upon manufacturing of these systems.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

## BRIEF DESCRIPTION OF THE DRAWINGS

Aspects of the invention will be explained in greater detail by reference to exemplary embodiments shown in the drawings, in which:

> FIG. 1 schematically shows an energy harvester according to an embodiment.
> FIG. 2 schematically shows a wheel 2 of a railway vehicle according to an embodiment;
> FIG. 3 shows a measured acceleration signal of a railway vehicle travelling at a constant speed;
> FIG. 4 illustrates a Fourier transform of figure 3's acceleration signal;
> FIG. 5 illustrates the FFT of figure 4, but now on a logarithmic scale;
> FIG. 6 shows 100 FFTs plotted together, each being measured for a different speed;
> FIG. 7 shows a power versus frequency response of an energy harvester according to an embodiment;
> FIG. 8 illustrates a data processing system according to an embodiment.

## DETAILED DESCRIPTION OF THE DRAWINGS

In the figures, identical reference numbers indicate identical or similar elements.

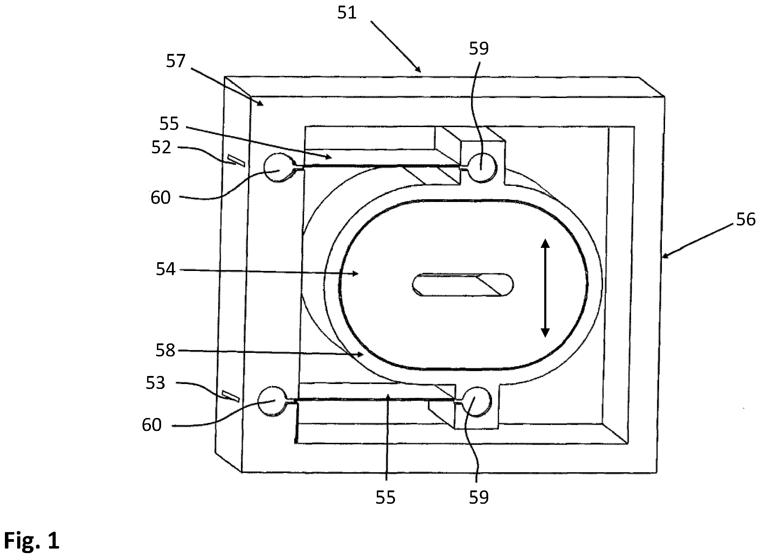

Figure 1 schematically shows an energy harvester according to an embodiment. The energy harvester comprises electrical outlet terminals 52, 53, which may be connected to a battery, and an electrical coil 54 connected to said terminals 52, 53. The electrical coil 54 is connected to the terminals 52, 53 through flexural elements 55 or flexures with electrically conductive properties, preferably comprising copper, which flexural elements 55 or flexures are also used for (indirectly) supporting the electrical coil 54.

Figure 1 further shows that the energy harvester 51 comprises an assembly 56 of a first frame 57 and a second frame 58. The second frame 58 is positioned within the first frame 57 and is connected thereto with two flexible elements 55 or flexures that support the second frame 58 within the first frame 57. The second frame 58 is equipped to house the electrical coil 54 which is movable through movement of the second frame 58 with reference to the first frame 57. The flexures 55 are therefore designed to provide sufficient flexibility in the support of the second frame 58, so that it can move with reference to the first frame 57, in the directions as indicated by the double arrow, when the energy harvester 51 is subjected to external vibrations.

To support the energy harvesting or energy conversion by the energy harvester 51 the assembly 56 is further equipped to directly or indirectly support at least one magnet (not shown since this is clear to the skilled person) which is fixed relative to the first frame 57 so as to arrange that movement of the electrical coil 54 within the magnet's magnetic field causes electrical power to appear through induction at the electrical outlet terminals 52, 53 that connect to the electrical coil 54. For this purpose it is preferred that the flexible elements 55 or flexures provide an electrical connection between the electrical coil 54 and the electrical outlet terminals 52, 53.

The flexible elements 55 or flexures are connected to both the first frame 57 and to the second frame 58 in receptacles 59, 60 that are provided in the first frame 57 and second frame 58 respectively. The receptacles 59, 60 are equipped and dimensioned to receive opposite extremities of one flexible element 55 or flexure.

Further details of such energy harvester may be found in WO19066650 A1. However, in principle, the design of any energy harvester can be tuned in order to achieve a power versus frequency response as desired, i.e. a power versus frequency as determined using the methods described herein.

The response of the coil to external vibrations, i.e. how the coil vibrates relative to frame 57 and thus the power versus frequency response of the energy harvester 51, can be influenced in various ways. A change of the mass of the oscillating coil 54 and frame 58 influences for example at which frequency the coil oscillates with the largest amplitudes, and thus influences the center frequency of the power versus frequency response referred to herein. A change of the stiffness of the flexures 55 influences the response, as well as a change of the magnetic field through which the coil 54 moves and the electrical parameters of the electrical components, e.g. the resistance of one or more resistors, the inductance of the coil, et cetera. The electrical components may be understood to provide electrical damping to the oscillations of the coil.

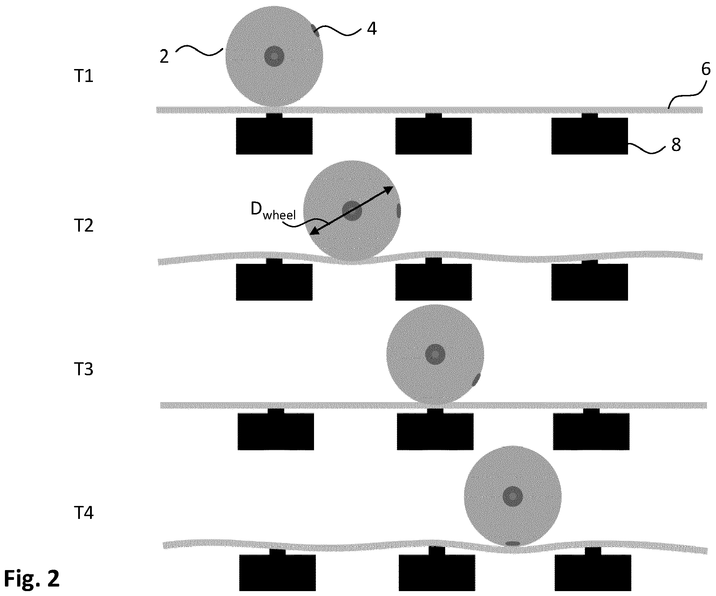

Figure 2 schematically shows a wheel 2 of a railway vehicle, such as a train, as it passes over a rail 6, typically supported by railway ties 8. In particular, figure 1 shows the position of the wheel 2 at four subsequent times T1, T2, T3, T4. The contact of the surface of the wheel 2 contains an irregularity 4, which contacts the rail 6 at time T4. As a consequence, at T4, the railway vehicle will receive an impulse. Naturally, since the irregularity of the wheel 2 contacts the rail 6 once per revolution of the wheel 2, the railway vehicle may be understood to receive an impulse signal having a frequency that is equal to the rotational frequency of the wheel 2. Such impulse signal causes relatively strong vibrations on and/or in the railway vehicle at that rotational frequency. Hence, it is advantageous to design a vibration energy harvester that outputs relatively high powers at the rotational frequency of the wheel. Of course, the actual rotational frequency of the wheel varies in dependence of the speed at which the railway vehicle is travelling. The rotational frequency of the wheel, also referred to herein as the fundamental frequency, can be determined based on a ratio between the expected speed of the railway vehicle and the diameter of the wheel of the railway vehicle, for example in accordance with

$$f_0 = v_{train} / (\pi^* D_{wheel}),$$

wherein $f_0$ indicates the fundamental frequency, $v_{train}$ indicates the expected speed of the railway vehicle and $D_{wheel}$ indicates the diameter of the wheel (also see figure 2).

Preferably, in one embodiment, it is first assessed at what speeds a railway vehicle travels most of the time in order to determine the appropriate power versus frequency response of an energy harvester for the railway vehicle in question.

It should be appreciated that although figure 2 shows one irregularity, the wheel 2 may comprise multiple irregularities, e.g. at least two, three, etcetera.

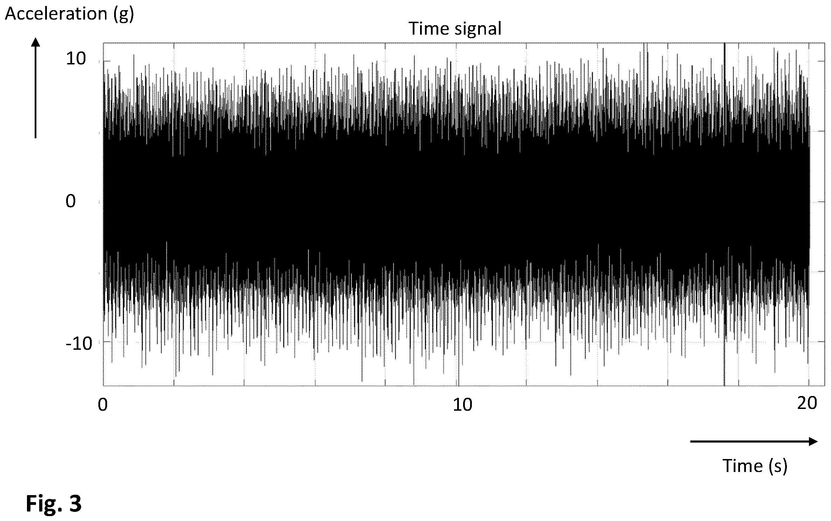

Figure 3 shows a measured acceleration signal indicating magnitude of acceleration (in the gravitational direction) versus time of a railway vehicle that is travelling at a constant speed, 100 km/h in this case.

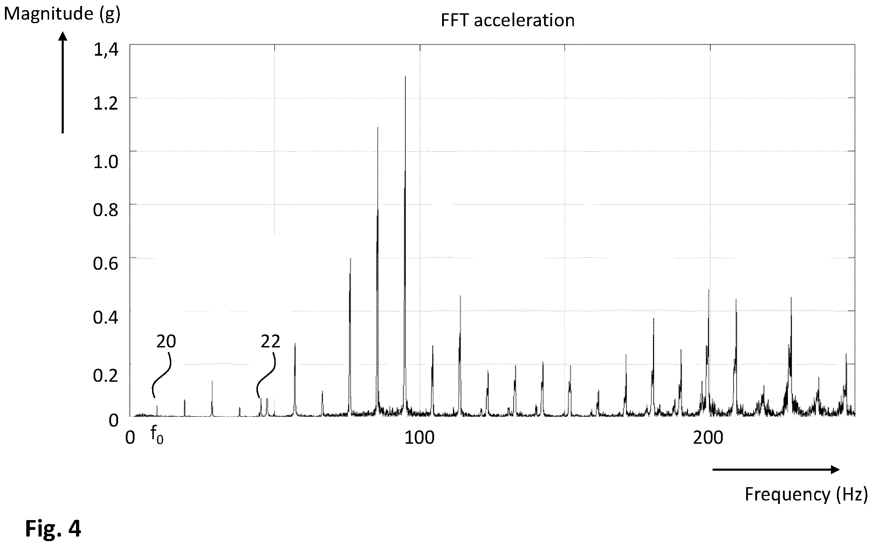

Figure 4 illustrates a Fourier transform of figure 3's acceleration signal, in particular a Fast Fourier Transform (FFT). As shown, the FFT comprises a plurality of distinct peaks at respective frequencyes. The lowest frequency where a peak occurs, in figure 4 peak 20, is called the fundamental frequency and depends on the diameter of the wheels of the railway vehicle and of course the speed of the railway vehicle as explained above.

If there were only one imperfection on the wheel surface, then only once per rotation a vibration would be present. If there are 2,3,4... imperfections on the surface, then a vibration at 2,3,4... times the fundamental frequency (wheel frequency) is to be expected. This imperfection phenomenon is also known as train wheel polygonization or train wheel out-of-roundness. This is shown in figure 4. Many peaks can be seen, and most of them are all integer multiplications of the fundamental frequency $f_0$. These peaks may also be referred to as harmonics of the fundamental frequency $f_0$. As a result, an equidistant frequency spacing of peaks arises in the frequency spectrum, of which the equidistant frequency spacing is depending on the train's speed and diameter of the wheels. There is one peak 22 is deviant from this principle, which may be associated with the tie frequency, i.e. the frequency with which a wheel passes over a tie. The tie frequency thus indicates the number of of track ties passing by per second.

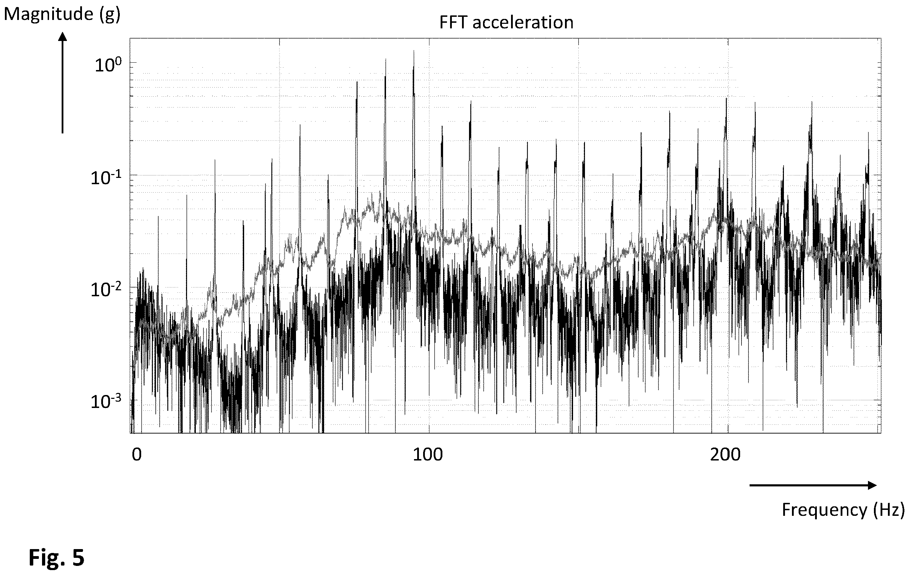

Figure 5 illustrates the FFT of figure 4, but now on a logarithmic scale. The grey line shows the structural dynamics of the location of the acceleration measurement. The peaks of the grey line show a structural resonance and the valleys an structural antiresonance. In order to have these structural resonances, their corresponding frequencies have to be excited. This is a result of the impulses the railway vehicle, e.g. the train bogie structure, experiences from either the rail interaction or the irregularity on the wheel. This means that the contact force between the wheel and rail is also a frequency spectrum, being able to excite the dynamics of the train bogie. Evidently, around the resonance frequencies the amplitudes of the harmonics are amplified, whereas around the antiresonance the amplitudes are attenuated.

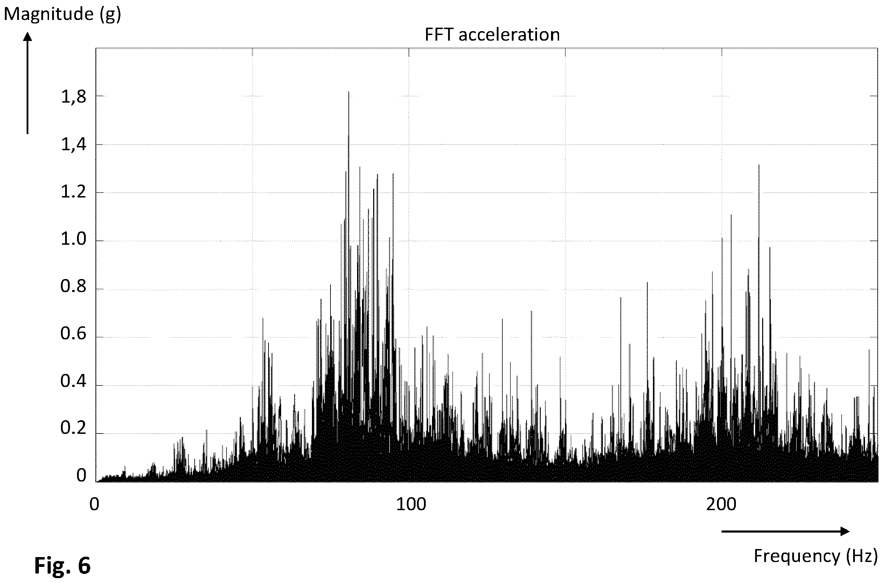

In an embodiment, the method of fabricating an energy harvester comprises measuring, for a plurality of speeds of the railway vehicle, vibrational accelerations at a position on and/or in the railway vehicle at which the to be fabricated energy harvester is intended. Such embodiment may comprise determining, for each speed of the plurality of speeds at which vibrational accelerations were measured, a Fourier transform of the measured accelerations. Each Fourier transform indicates for a plurality of frequencies respective magnitudes of acceleration. As an example, figure 6 shows 100 FFTs plotted together. Among those 100 FFTs, the train speed was varied between 0 and 100 km/h.

Then, a range of frequencies may be determined where the Fourier transforms exhibit relatively large magnitudes of acceleration, relative to other one or more frequency ranges. As referred to herein, relatively large magnitudes of acceleration may be understood as that an average height of all peaks of all Fourier transforms in the range of frequencies is higher than 1.5 times the average height of all peaks of all Fourier transforms in the other one or more frequency ranges, preferably higher than 1.8 times, more preferably higher than 2 times. In the example of figure 6, the range 80 - 90 Hz contains Fourier transforms having relatively large magnitudes. Then, a frequency in such range of frequencies may be determined to be the center frequency of the power versus frequency response of the energy harvester. In one embodiment, the frequency at the midpoint of this range is taken as the center frequency for the power versus frequency response.

As a side note, also the Fourier transforms in the range 190 - 210 Hz exhibit relatively large magnitudes of acceleration. However, preferably, tuning the energy harvester to lower frequencies relaxes the design constraints, e.g. in terms of material to be used, and may thus be preferred. Further, the peaks at the lower frequency occur at lower speeds of the train as well, whereas the peaks at the higher frequency occur primarily, or only, at higher speeds. This is another advantage of selecting the range 80 - 90 Hz.

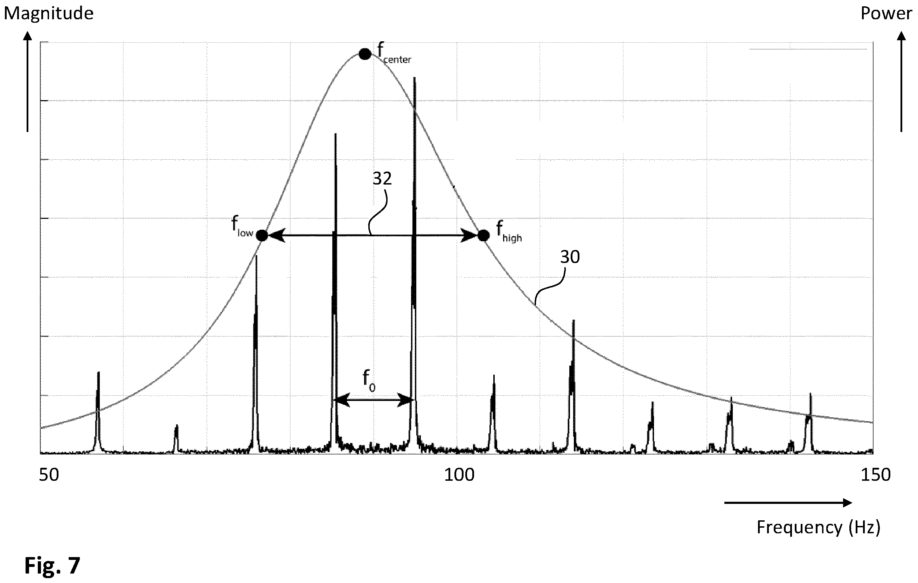

Figure 7 indicates a power (right-hand vertical axis) versus frequency response 30 for an energy harvester as determined by performing the methods described herein. As can be seen, the power versus frequency response defines, for each of a plurality of frequencies of mechanical vibrations provided to the energy harvester, a power as output by the energy harvester. In figure 7, the power versus frequency response 30 is plotted together with the magnitude (left-hand vertical axis) of vibrations that occur at the expected speed of the railway vehicle, for example the speed at which the railway vehicle is expected to travel most of the time or an average speed of the railway vehicle. For this expected speed, the fundamental frequency f_0 is indicated. The peaks in this Fourier transform for this expected speed are separated by a frequency distance equal to f_0.

The energy harvester's response 30 is a peak having its maximum value at f_center. Further, in this embodiment, the full width at half maximum 32 of response 30 is approximately 2.5 times the fundamental frequency.

This shows that the power versus frequency response can be determined based on the determined fundamental frequency and such that it has a peak having a full width at half maximum, FWHM , that is equal to or larger than twice the fundamental frequency, preferably equal to or larger than three times the fundamental frequency.

To improve output robustness, i.e. to deliver sufficient output power under varying velocity conditions, the peak should be sufficiently wide. Height and width of the peak 30 have an inverse relation: the narrower the peak, the higher the peak. Thus, the lower the damping (which narrows the peak), the more power can be extracted at a very specific frequency, at the cost of a narrow bandwidth. Slight variations in the frequency of the input then have a large effect in output power. Increasing the damping will broaden the peak yet reduce the height of the peak, meaning that the harvester can pick up more frequencies, at the cost of extracting less power.

An suitable trade-off between output power and bandwdith is for example the following. To generate sufficient output power while being robust enough to frequency variations caused by different train speeds, it is deemed suitable that the range f_low - f_high should enclose at least three harmonics, of which the harmonics correspond to the signal of the train at the expected speed (e.g. -100 km/h).

The equidistant spacing between the harmonics equals the fundamental frequency f0. As the bandwidth should envelop 3 harmonics, the bandwidth therefore equals two times the harmonic spacing, being two times the fundamental frequency fo which is the frequency corresponding to the wheel rotation.

Once the desired power versus frequency response has been determined, can the relevant parameters of the energy harvester, such as damping, stiffness, mass, be determined using methods known in the art. For example, a minimum electric damping ratio may be determined for the energy harvester, for example in accordance with $\zeta_e = FWHM/(2 \cdot f_{centre}) - \zeta_m$ wherein $\zeta_e$ indicates the minimum electric damping ratio, $\zeta_m$

indicates a mechanical damping ratio, FWHM indicates the FWHM of the peak of the power versus frequency response, $f_{centre}$ indicates the determined centre frequency

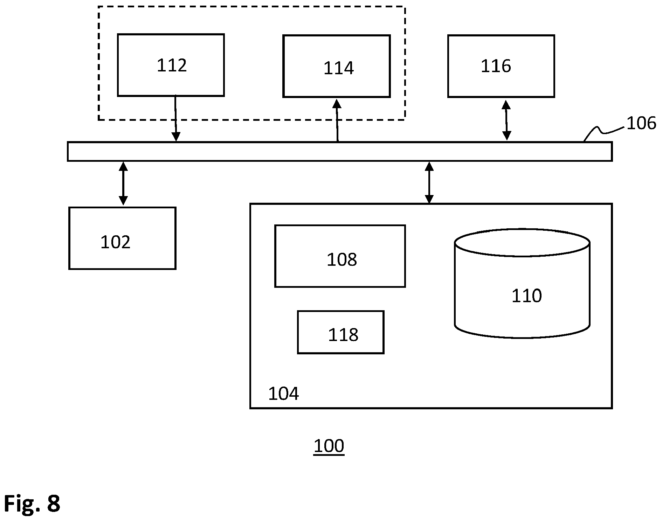

Fig. 8 depicts a block diagram illustrating a data processing system according to an embodiment.

As shown in Fig. 8, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, a touch-sensitive display, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 8 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in Fig. 8, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in Fig. 8) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

**Claims**

1. A method for fabricating an on-board railway energy harvester for a railway vehicle, wherein

   the energy harvester is configured to convert mechanical vibrations into electrical power, the method comprising
   based on a diameter of a wheel of the railway vehicle and on an expected speed of the railway vehicle, determining a power versus frequency response of the energy harvester, the power versus frequency response defining, for each of a plurality of frequencies of mechanical vibrations provided to the energy harvester, a power as output by the energy harvester, and
   fabricating the energy harvester such that it has the determined power versus frequency response.

2. The method according to claim 1, further comprising

   based on the diameter of the wheel of the railway vehicle and on the expected speed of the railway vehicle, determining a fundamental frequency, and
   based on the determined fundamental frequency, determining the power versus frequency response such that it has a peak having a full width at half maximum, FWHM, that is equal to or larger than twice the fundamental frequency, preferably equal to or larger than three times the fundamental frequency.

3. The method according to claim 2, wherein the fundamental frequency is determined based on a ratio between the expected speed of the railway vehicle and the diameter of the wheel of the railway vehicle.

4. The method according to claim 3, wherein the fundamental frequency is determined in accordance with $f_0 = v_{train}/(\pi^* D_{wheel})$, wherein $f_0$ indicates the fundamental frequency, $v_{train}$ indicates the expected speed of the railway vehicle and $D_{wheel}$ indicates the diameter of the wheel.

5. The method according to any of claims 1-4, further comprising

   measuring, for a plurality of speeds of the railway vehicle, vibrational accelerations at a position on and/or in the railway vehicle at which the to be fabricated energy harvester is intended, and based on the measured vibrational accelerations, determining a centre frequency for the power versus frequency response, the centre frequency being the frequency at which a peak, optionally the peak referred to in claim 2, of the power versus frequency response has its maximum value.

6. The method according to claim 5, comprising

   determining, for each speed of the plurality of speeds at which vibrational accelerations were measured, a Fourier transform of the measured accelerations, each Fourier transform indicating for a plurality of frequencies respective magnitudes of acceleration, and
   determining a range of frequencies where the Fourier transforms exhibit relatively large magnitudes of acceleration, relative to other one or more frequency ranges, and
   determining a frequency in said range of frequencies to be the centre frequency of the power versus frequency response of the energy harvester.

7. The method according to any of the preceding claims, further comprising

   based on the determined power versus frequency response of the energy harvester, determining a minimum electric damping ratio for the energy harvester, wherein
   the step of fabricating the energy harvester such that it has the determined power versus frequency response comprises fabricating the energy harvester having the determined minimum electric damping ratio.

8. The method according to claims 2, 5 and 7, wherein the minimum electric damping ratio is determined in accordance with $\zeta_e = FWHM/(2^* f_{centre}) - \zeta_m$ wherein $\zeta_e$ indicates the minimum electric damping ratio, $\zeta_m$ indicates a mechanical damping ratio, FWHM indicates the FWHM of the peak of the power versus frequency response, $f_{centre}$ indicates the determined centre frequency.

9. The method according to any of the preceding claims, further comprising, based on a distance between tie tracks of the rails that are to support the railway vehicle and on the expected speed of the railway vehicle, determining the power versus frequency response of the energy harvester.

10. A railway energy harvester obtainable by performing the method according to any of claim 1-9.

11. A railway energy harvester that is configured to convert mechanical vibrations into electrical power, wherein

the energy harvester exhibits a power versus frequency response, the power versus frequency response defining, for each of a plurality of frequencies of mechanical vibrations provided to the energy harvester, a respective power as output by the energy harvester, wherein the power versus frequency response has a peak, and wherein

the peak has a full width at half maximum, FWHM, that is equal to or larger than twice a fundamental frequency, the fundamental frequency being given by with $f_0= v_{train}/(\pi*D_{wheel})$, wherein $f_0$ indicates the fundamental frequency, $v_{train}$ indicates the expected speed of the railway vehicle and $D_{wheel}$ indicates the diameter of the wheel, and/or wherein

the peak has its maximum value at a centre frequency, the centre frequency being a frequency in a range of frequencies, said range of frequencies being a range in which a plurality of Fourier transforms, each Fourier transform indicating for a plurality of frequencies respective magnitudes of acceleration, exhibit relatively large magnitudes of acceleration, relative to other one or more frequency ranges, wherein the Fourier transforms are obtainable by

- measuring, for a plurality of speeds of the railway vehicle, vibrational accelerations at a position on and/or in the railway vehicle at which the to be fabricated energy harvester is intended, and
- for each speed of the plurality of speeds at which vibrational accelerations were measured, determining a Fourier transform of the measured accelerations.

12. A computer-implemented method for determining a power versus frequency response for a railway energy harvester that is configured to convert mechanical vibrations into electrical power, the method comprising

determining, based on a diameter of a wheel of a railway vehicle and on an expected speed of the railway vehicle, a power versus frequency response of the energy harvester, the power versus frequency response defining, for each of a plurality of frequencies of mechanical vibrations provided to the energy harvester, a respective power as output by the energy harvester.

13. A data processing system comprising a processor that is configured to perform the method according to claim 12.

14. A computer program comprising instructions, which, when executed by a data processing system, cause the data processing system to perform the method according to claim 12.

15. A railway vehicle, such as a train, having installed thereon, preferably on an axle of the wheel and/or on a hub of the wheel, the railway energy harvester according to any of claims 10 or 12.

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 22 17 8323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/066650 A1 (KINERGIZER IP BV [NL]) 4 April 2019 (2019-04-04) * the whole document * | 1-15 | INV. F03G7/08 |
| X | WO 2013/175449 A2 (JIA YU [GB]; YAN JIZE [GB] ET AL.) 28 November 2013 (2013-11-28) * the whole document * | 1-15 | |
| X | WO 2022/043710 A1 (8POWER LTD [GB]) 3 March 2022 (2022-03-03) * the whole document * | 1-15 | |
| A | YANG FAN ET AL: "Efficient piezoelectric harvester for random broadband vibration of rail", ENERGY, ELSEVIER, AMSTERDAM, NL, vol. 218, 10 December 2020 (2020-12-10), XP086452256, ISSN: 0360-5442, DOI: 10.1016/J.ENERGY.2020.119559 [retrieved on 2020-12-10] * the whole document * | 1-15 | |
| A | PAN YU ET AL: "Modeling and onboard test of an electromagnetic energy harvester for railway cars", APPLIED ENERGY, ELSEVIER SCIENCE PUBLISHERS, GB, vol. 250, 10 May 2019 (2019-05-10), pages 568-581, XP085749257, ISSN: 0306-2619, DOI: 10.1016/J.APENERGY.2019.04.182 [retrieved on 2019-05-10] * the whole document * | 1-15 | |

TECHNICAL FIELDS
SEARCHED (IPC)

F03G

The present search report has been drawn up for all claims

| Place of search | Date of completion of the search | Examiner |
|---|---|---|
| Munich | 24 November 2022 | Alquezar Getan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 8323

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2022

| Patent document cited in search report | | Publication date | Patent family member(s) | | Publication date |
|---|---|---|---|---|---|
| WO 2019066650 | A1 | 04-04-2019 | NONE | | |
| WO 2013175449 | A2 | 28-11-2013 | CN | 104904110 A | 09-09-2015 |
| | | | EP | 2856628 A2 | 08-04-2015 |
| | | | JP | 6159797 B2 | 05-07-2017 |
| | | | JP | 2015517791 A | 22-06-2015 |
| | | | JP | 2017195767 A | 26-10-2017 |
| | | | US | 2015135869 A1 | 21-05-2015 |
| | | | WO | 2013175449 A2 | 28-11-2013 |
| WO 2022043710 | A1 | 03-03-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 19066650 A1

**Non-patent literature cited in the description**

- **QI et al.** A review of vibration energy harvesting in rail transportation field. *iScience,* 18 March 2022, vol. 25 (3), 103849